# EUROPEAN PATENT APPLICATION

(11) **EP 4 477 462 A1**
(43) Date of publication of application: **18.12.2024**
(21) Application number: 23179015.5
(22) Date of filing: 13.06.2023
(51) Int. Cl.: B60L 58/25, B60L 58/27

(54) **METHOD FOR GENERATING HEAT IN AN ELECTRIC VEHICLE**

(71) Applicant: Volvo Car Corporation, 405 31 Göteborg (SE)
(72) Inventor: ISLAM, M Jahirul, 40531 Göteborg (SE)
(74) Representative: Maiwald GmbH

(57) **Abstract**

The disclosure relates to a method for generating heat in an electric vehicle comprising an electric motor, the method comprising determining if the electric motor is at a standstill operation, upon determining that the electric motor is at a standstill operation, supplying the electric motor with a power, thereby generating the heat at the electric motor, the supplied power being from a frequency range, and collecting the generated heat at the electric motor by a heat pump system of the electric vehicle.

## Description

The present disclosure relates to a method for generating heat in an electric vehicle, an electric vehicle comprising an electric motor, a heat pump system and at least one controller adapted to execute the steps of the method, and a computer program product comprising instructions to cause the electric vehicle to execute the steps of the method.

Due to environmental targets, such as to reduce Carbon dioxide emissions, reduction of greenhouse gases in the atmosphere and consequently preventing global warming, vehicles with electric motors are becoming more and more popular. Due to limited battery power and demand in the higher range, energy efficiency in electric vehicle drive trains and thermal management systems is very important. Vehicles work at an increased efficiency under the right thermal conditions.

In electrical propulsion systems, an electric motor consumes most of the electric power and is considered a dominant heat source. More specifically, in an electric motor, the temperature gets the highest at stator windings and they may be, therefore, considered a heat source of the electric motor. Accordingly, the electric motor may be utilised for heat generation to bring the electric vehicle systems to the optimum thermal condition. Especially during a standstill, the electric motor may provide additional heat for purposes such as heating the battery or the passenger cabin before driving. Nevertheless, supplying the electric motor with alternating current (AC) voltage may generate high torque and if the electric motor is not completely disconnected from the wheels, the generated torque may damage the electric motor.

Hence, there may be a need for providing an improved method for generating heat in an electric vehicle, as well as an improved electric vehicle, which may be provided with additional heat when, for instance, conventional heat generation is not sufficient for the efficient functioning of the electric vehicle. Further, there may be a need for providing a computer program product, which may cause an electric vehicle to execute a method for generating heat efficiently.

The problem is at least partially solved or alleviated by the subject matter of the independent claims of the present disclosure, wherein further examples are incorporated in the dependent claims.

According to a first aspect, there is provided a method for generating heat in an electric vehicle comprising an electric motor. The method for generating heat comprises:
- determining if the electric motor is at a standstill operation,
- upon determining that the electric motor is at a standstill operation, supplying the electric motor with power, thereby generating the heat at the electric motor, the supplied power being from a frequency range, and
- collecting the generated heat at the electric motor by a heat pump system of the electric vehicle.

The method for generating heat can utilize the electric motor of the electric vehicle to generate extra heat during standstill operation. The electric vehicle may be, for example, a battery electric vehicle (BEV) or a plug-in hybrid electric vehicle (PREY) or a fuel cell electric vehicle (FCEV). For example, the electric motor may be an induction or a permanent magnet, a synchronous reluctance, a permanent magnet-assisted synchronous reluctance, or an electrically excited synchronous motor.

The standstill operation may be an operation of the electric motor, in which the electric motor does not generate torque or at least not sufficient torque to drive the electric vehicle. Hence, the electric vehicle may be at a standstill by virtue of the electric motor. This does not exclude, however, the electric vehicle from moving by means of another propulsion system, i.e., an internal combustion engine or when rolling downhill, for example. However, the standstill operation of the electric motor may be a standstill operation of the electric vehicle, e.g., when the electric motor is the only propulsion system or by means of software settings.

During the standstill operation, at least one system of the electric vehicle may be active. Accordingly, not all systems of the electric vehicle may need to be active while some systems may still be active. For instance, the electric motor may still receive power from the battery or an external source, but it does not generate torque, or enough torque to move the vehicle. Heating and cooling systems, on the other hand, can still function at a standstill to maintain a temperature inside the passenger cabin or battery, as well as other systems such as lights, infotainment systems, and accessories may continue working. In standstill operation, battery temperature may be observed to ensure that the battery is being properly maintained. This may help prolonging the life of the battery and ensure that it has enough charge to power the vehicle when it is in use.

By determining that the electric motor is at the standstill operation, the method may ensure supplying the electric motor with enough power for heat generation and not enough power for generating torque by the electric motor. Accordingly, unintentional torque generation at the electric motor and thereby causing a movement of the electric vehicle or damaging the electric motor may be prevented. For this, the supplied power may be selected from a frequency range that is suitable for energizing the electric motor to generate heat but not torque. After feeding the electric motor with current and thereby causing the electric motor to generate heat, the generated heat may be collected by the heat pump system. The heat pump system may comprise a heat pump with an evaporator, a compressor, a heat exchanger, and/or an expansion valve.

The principle behind heat generation at the electric motor may be defined by electrical energy generated at the electric motor by supplying it with electric power or electric current and that is lost as heat due to resistive losses in electric motor components, such as stator windings. As during the standstill operation, the electric motor is not required to provide torque, the electric motor may be used particularly for generating extra heat. Standstill operation may be a state where the electric vehicle is at a standstill and the electric motor may still produce power to run the vehicle's systems and accessories, but may not produce any significant amount of torque to move the electric vehicle. This can occur, for instance, when the electric vehicle is stopped at a traffic light or in heavy traffic, or before starting to drive the vehicle, for example still at a parking place.

Generally, an electric vehicle may generate heat by means other than the electric motor. Accordingly, the term "heat generation" may refer to the heat generated by the electric motor by this method during the standstill operation of the electric motor different from the heat generated by other means and/or during traction or while stopping the vehicle. Accordingly, the heat generation referred to in this disclosure is directed at heat generation in addition or extra to conventional heat generation. The conventional heat generation may be by means of, for instance, a battery module, power electronics and/or an on-board charger of the electric vehicle.

The generated heat may be collected by the heat pump system, which may be configured to store the generated heat in a refrigerant fluid passing there through. The refrigerant fluid may be a coolant or oil used in the transmission unit to increase lubrication. The stored heat may be delivered to a place with heat demand. The heat demand may be for instance at the passenger cabin of the electric vehicle, for heating up at least a section of the electric motor, and/or the vehicle battery, e.g., during cold weather.

The method may be at least partly computer-implemented and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

According to an example, the frequency may be from the range of 0 to 0,5 Hz, in particular 0 to 0,1 Hz, further in particular 0 to 0,02 Hz. The frequency range of 0 to 0,5 Hz may provide power to the electric motor at a level that may ensure heat generation while not causing enough torque generation for the electric vehicle to move. While both the ranges 0 to 0,1 Hz and 0 to 0,02 Hz meet this condition, particularly a frequency at 0,02 Hz may provide minimum resistive losses. An applicable frequency range may be predefined by the vehicle specifications and/or selected by the user.

According to an example, the frequency may be more than 0 such that AC power is supplied to the electric motor, the supplying of the AC power comprising converting a DC power from a power source to the AC power by means of a DC/AC converter of the electric vehicle. The frequency range may be predefined by the vehicle specifications and/or the frequency may be selected by the user. The power source may be for instance the vehicle battery. In this example, the power supplied to the electric motor for heat generation may be obtained from the vehicle battery, which may provide DC power that may be converted to AC power by using a DC/AC converter. The power source may alternatively be an external power source, such as a standalone battery. By using the external battery as the power source, the electric vehicle battery inside the vehicle may be free from generating heat. The DC/AC converter may also be an external DC/AC converter or a built-in converter inside the electric vehicle. The external DC/AC converter may be preferred especially with the external battery.

According to an example, the frequency may be substantially 0 such that DC power is supplied to the electric motor. The user may select the frequency to be substantially 0 for supplying DC power. The supplying of the DC power may comprise converting the DC power from the power source by means of an autotransformer of the electric vehicle. Substantially 0 may mean to be 0 or a very low positive value such as 0,001 Hz, which may still provide DC power. By supplying the power to the electric motor in the form of DC power, a DC/AC converter may not need to be used. The autotransformer may be used to step down a voltage of the electric vehicle battery to a voltage level that is enough to generate heat without driving the electric motor. The autotransformer may comprise primary and secondary windings with secondary winding having fewer turns than the primary winding. With such a configuration, the transformer can be designed to match a desired output voltage converted from an input voltage of the DC power. In this example, the autotransformer may be a conventional built-in autotransformer of the vehicle that is used for conversion from the high voltage of the battery to, for instance, a 12V battery. Accordingly, the autotransformer may provide flexibility in adjusting the supplied DC power.

According to an example, the supplied power may have a voltage to be supplied to the electric motor, the voltage may be from a voltage range of 0 to 60V, in particular 5 to 40V. The defined voltage range of 0 to 60V may provide power to the electric motor at a level that may ensure heat generation while not causing significant torque generation (not enough for the electric vehicle to drive). While both the ranges 0 to 60V, and 5 to 40V meet this condition, particularly a voltage selected from 5 to 40V may provide heat generation while minimizing resistive losses. The applicable voltage range may be predefined, e.g. by the vehicle specifications or selected by the user.

According to an example, determining the standstill operation of the electric motor may comprise determining if a velocity of the electric vehicle is zero, for instance by a speed measurement means such as a speedometer or odometer, and/or if the electric motor of the electric vehicle is powered on. Powered on may mean, that the electric motor is ready to be fed with electric current. If these two conditions are fulfilled, it may be understood that the electric vehicle is available for executing the method for generating heat.

Alternatively, or additionally, the method may comprise starting at a time schedule. This may be particularly useful for an autonomous start of the method. For instance, the method may be set to start at a certain time in the morning before starting the drive, or at a time when the user usually leaves work. Another use case may be in winter conditions to start the method at specific periods to keep at least one component or space, such as the cabin, electric battery, etc. of the electric vehicle at a certain temperature. Accordingly, the specified schedule may be also linked with a temperature sensor at specific locations to adjust the time schedule according to the measured temperature.

According to an example, the method may comprise starting at a cold-start phase of the electric vehicle. The cold-start phase may refer to a period of time when the electric motor is first started from a rest position, such as when the electric vehicle has been standing overnight or for an extended period. During this phase, the electric motor may be cold and not yet reached its optimal operating temperature. Starting the drive from a cold-start phase may lead to increased emissions and reduced efficiency. Accordingly, by the heat generation method, the electric motor may warm up and reach its optimal operating temperature.

According to an example, the method may comprise receiving an extra heat demand of the electric vehicle. According to this example, the method may be only initiated with a demand for extra heat. Accordingly, fatigue in the electric motor may be kept at a minimum and the lifetime of the electric motor may be extended. The extra heat demand may be determined for at least a section of the electric motor, a battery or a passenger cabin of the electric vehicle. For instance, segments of the electric vehicle that are exposed to cold environments may require to be heated to reach a temperature level of the other components which are less susceptible to cold. Another example could be the components that need to be heated for a safe drive, such as a windshield of the vehicle which needs to be freed from ice. Of course, the heat may be also demanded for external usage. Alternatively, based on their material characteristics, some components may tend to warm up faster than others and this may require the cooler components to heat up for providing an even heat distribution. Heat demand may be formulated as the required heat to bring the current temperature to the required temperature at the specific part of the electric vehicle.

Alternatively, or additionally, the extra heat demand of the electric vehicle may be determined based on a resistance of the electric motor. The resistance of an electric motor may be an opposition offered by the motor's stator windings to a flow of electric current passing therethrough. The resistance is measured in ohms and it can vary depending on the motor's design, temperature, and the materials used in its construction. The resistance of the motor can affect its performance and efficiency, and the extra heat generated per supplied unit power.

According to an example, the method may comprise stopping the power supply to the electric motor by a logic unit when the extra heat demand falls under a value or is equal to zero. The logic unit may be, for instance, a switching unit that is configured to control a switch between an on and an off position. The heat demand may be detected by a sensor measuring the temperature of selected components or locations of the electric vehicle. The logic unit may be used with the autotransformer for turning off an existing DC/AC converter in order not to supply current to the electric motor therethrough, and only the autotransformer may be turned on to supply the current for reaching the required temperature of the electric motor. The logic unit may be an electronic circuit for controlling switching of electronic components in the electric vehicle. The logic unit may be responsible for managing the timing and sequencing of signals and/or controlling the flow of current to the electric motor, thereby enabling or disabling heat generation. The logic unit may end heat generation when the extra heat demand falls under a value or when there is no more heat demand. With this, overheating of the parts of the electric vehicle that are delivered with heat may be prevented.

According to an example, the heat pump system may be configured to collect heat from stator windings of the electric motor. Stator windings may be utilised as being the central heat source with the potential of providing the highest heat in the electric motor.

According to an example, power supply to the electric motor may be increased gradually until the voltage and/or the frequency is reached for generating heat in the electric motor. The voltage or frequency to be reached may be selected by the user or determined by the vehicle specifications. Sudden application of voltage and frequency at the selected amount can result in a surge of current that may damage the electric motor or other components in the electrical system. Gradually increasing the voltage and/or frequency may allow the motor to heat up more smoothly and with less stress on the system. Additionally, this approach can help to reduce power spikes and improve energy efficiency. Finally yet importantly, by the gradual increase of the voltage and/or the frequency, temperature behaviour may be observed and an accurate interference in the heat generation may be achieved.

According to a second aspect, there is provided an electric vehicle comprising an electric motor, a heat pump system and at least one controller adapted to execute the steps of the method for generating heat. The controller may be connected to each component that is a part of the method.

According to a third aspect, there is provided a computer program product comprising instructions to cause the electric vehicle to execute any of the steps of the method.

It should be noted that the above examples may be combined with each other irrespective of the aspect involved. Accordingly, the method may be combined with structural features and, likewise, the apparatus and the system may be combined with features described above with regard to the method.

These and other aspects of the present disclosure will become apparent from and elucidated with reference to the examples described hereinafter.

Examples of the disclosure will be described in the following with reference to the following drawings.
- Figure 1: schematically shows a flow diagram of a method for generating heat in an electric vehicle, according to the present disclosure.
- Figure 2: schematically shows a block diagram of an electric vehicle comprising an electric motor, a heat pump system and at least one controller adapted to execute the steps of the method, according to the present disclosure.

The Figures are merely schematic representations and serve only to illustrate examples of the disclosure. Identical or equivalent elements are in principle provided with the same reference signs.

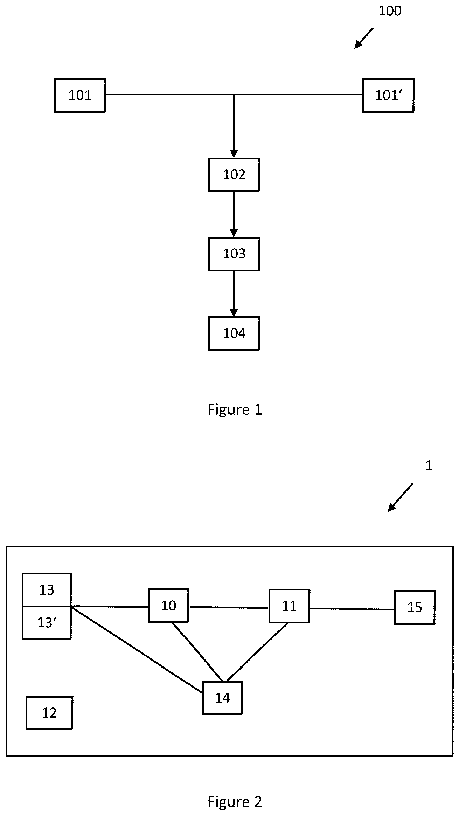

Figure 1 shows schematically a flow diagram of an exemplary method 100 for generating heat in an electric vehicle 1, the vehicle 1 being illustrated in Figure 2. The method 100 for generating heat in an electric vehicle 1 comprising an electric motor 10, the method comprises the following: determining if the electric motor 10 is at a standstill operation (step 102) and upon determining that the electric motor 10 is at a standstill operation, supplying the electric motor 10 with a power (step 103). By supplying power to the electric motor 1, the heat is generated at the electric motor 10. The power is selected from a frequency range. The method further comprises collecting the generated heat at the electric motor 10 by a heat pump system 11 of the electric vehicle 1 (step 104).

Optionally, the method may further comprise receiving an extra heat demand of the electric vehicle 1 (step 101). Accordingly, the method shown in Figure 1 is depicted to start with receiving the heat demand (step 101) and then determining the standstill operation (step 102) of the motor 10. As mentioned above, this may prevent unnecessary start of the method and may ensure efficient extra heat generation.

Optionally, the method may comprise starting at a time schedule (step 101'). The time schedule may trigger initiation of the method without requiring receiving the extra heat demand. The method may proceed further with determining the standstill operation (step 102) of the electric motor 10.

Figure 2 shows schematically a block diagram of an exemplary electric vehicle 1 comprising an electric motor 10, a heat pump system 11 and at least one controller 12 adapted to execute the steps of the method. The generated heat at the electric motor 10 is collected by the heat pump system 11, which is depicted as being connected to the electric motor 10. The collected heat may be delivered to a place with heat demand. The heat demand may be for instance at the passenger cabin 15 of the electric vehicle 1 or the power source 14, such as the battery. In either case, the heat pump system 11 is illustrated as connected to the passenger cabin 15, the electric motor 10 and the power source 14. But these illustrations are only for presenting examples and do not exclude any alternative connections to other components of the electric vehicle 1, for instance, the windshield.

It is further illustrated in Figure 2 that when the frequency is selected to be more than 0 such that AC power is supplied to the electric motor 10, the supplying of the AC power comprises converting a DC power from a power source 14, such as the vehicle battery, to the AC power by means of a DC/AC converter 13. Accordingly, the battery is connected to the electric motor through the DC/AC converter for converting the DC power of the power source 14 to the AC power compatible with the electric motor 1. In addition, the controller 12 is being illustrated in Figure 2 as being comprised in the electric vehicle 1 for executing the steps of the method although the controller 12 can be also external.

Alternatively, Figure 2 further illustrates that when DC power is supplied to the electric motor 10, the DC power may be converted from the power source 14 by means of an autotransformer 13'. Accordingly, Figure 2 depicts the DC/AC converter and the autotransformer as alternative means for obtaining the required supply power to the electric motor 10 for generating heat. For this, the autotransformer 13' or the DC/AC converter 13 are depicted as connected to the power source 14 and the electric motor 10 of the electric vehicle 1. Of course, the power source 14 can be an external power source, such as an external battery and the autotransformer 13' can be also external, i.e. outside the electric vehicle 1.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 1: Electric vehicle
- 10: Electric motor
- 11: Heat pump system
- 12: Controller
- 13: DC/AC converter
- 13': Autotransformer
- 14: Power source
- 15: Passenger cabin
- 16: Stator windings
- 100: Method

## Claims

1. A method (100) for generating heat in an electric vehicle (1) comprising an electric motor (10), the method (100) comprising:
- determining if the electric motor (10) is at a standstill operation (102),
- upon determining that the electric motor (10) is at a standstill operation, supplying the electric motor (10) with a power (103), thereby generating the heat at the electric motor (10), the supplied power being from a frequency range, and
- collecting the generated heat at the electric motor (10) by a heat pump system (11) of the electric vehicle (104).

2. The method according to claim 1, wherein the frequency is from the frequency range of 0 to 0,5 Hz, in particular 0 to 0,1 Hz, further in particular 0 to 0,02 Hz.

3. The method according to claim 2, wherein the frequency is more than 0 such that AC power is supplied to the electric motor (10), the supplying of the AC power comprising converting a DC power from a power source (14) to the AC power by means of a DC/AC converter (13).

4. The method according to claim 2, wherein the frequency is substantially 0 such that DC power is supplied to the electric motor, the supplying of the DC power comprising converting the DC power from the power source (14) by means of an autotransformer (13').

5. The method according to any of the previous claims, wherein the supplied power has a voltage to be supplied to the electric motor, the voltage being from a voltage range of 0 to 60V, in particular 5 to 40V.

6. The method according to any of the previous claims, wherein determining the standstill operation of the electric motor (10) comprises determining
if a velocity of the electric vehicle (1) is zero, and/or
if the electric motor (10) of the electric vehicle (1) is powered on.

7. The method according to any of the previous claims, comprising starting the method at a time schedule (101').

8. The method according to any of the claims 1-6, comprising receiving an extra heat demand of the electric vehicle (101).

9. The method according to claim 8, the extra heat demand being determined for at least a section of the electric motor (10), the vehicle battery (14) and/or a passenger cabin (15) of the electric vehicle (1).

10. The method according to claim 8 or 9, wherein the extra heat demand of the electric vehicle (1) is determined based on a resistance of the electric motor (10).

11. The method according to any of the claims 8-10, further comprising stopping power supply to the electric motor (10) by a logic unit (16) when the extra heat demand falls under a value or is equal to zero.

12. The method according to any of the previous claims, wherein power supply to the electric motor (10) is increased gradually until the voltage and/or the frequency is reached for generating heat.

13. The method according to any of the previous claims, wherein the heat pump system (11) is configured to collect heat from stator windings (16) of the electric motor (10).

14. An electric vehicle (1) comprising an electric motor (10), a heat pump system (11) and at least one controller (12) adapted to execute the steps of the method according to any of the previous claims.

15. A computer program product comprising instructions to cause the electric vehicle (1) of the previous claim to execute any of the steps of the method claims 1-13.

## Amended claims

### Amended claims in accordance with Rule 137(2) EPC.

1. A method (100) for generating heat in an electric vehicle (1) comprising an electric motor (10), the method (100) comprising:
- determining if the electric motor (10) is at a standstill operation (102),
- upon determining that the electric motor (10) is at a standstill operation, supplying the electric motor (10) with a power (103), thereby generating the heat at the electric motor (10), and
- collecting the generated heat at the electric motor (10) by a heat pump system (11) of the electric vehicle (104),
**characterized in that**
the frequency of the supplied power is substantially 0 such that DC power is supplied to the electric motor (10), the supplying of the DC power comprising converting the DC power from a power source (14) by means of a transformer (13'), the transformer (13') comprising primary and secondary windings for conversion from higher voltage of the power source (14) to a lower voltage, the transformer (13') being connected between the power source (14) and the electric motor (10), and providing DC power to the electric motor (10) without using a DC/AC converter (13) connected to the motor.

2. The method according to any of the previous claims, wherein the supplied power has a voltage to be supplied to the electric motor, the voltage being from a voltage range of 0 to 60V, in particular 5 to 40V.

3. The method according to any of the previous claims, wherein determining the standstill operation of the electric motor (10) comprises determining if a velocity of the electric vehicle (1) is zero, and/or
if the electric motor (10) of the electric vehicle (1) is powered on.

4. The method according to any of the previous claims, comprising starting the method at a time schedule (101').

5. The method according to any of the claims 1-3, comprising receiving an extra heat demand of the electric vehicle (101).

6. The method according to claim 5, the extra heat demand being determined for at least a section of the electric motor (10), the vehicle battery (14) and/or a passenger cabin (15) of the electric vehicle (1).

7. The method according to claim 5 or 6, wherein the extra heat demand of the electric vehicle (1) is determined based on a resistance of the electric motor (10).

8. The method according to any of the claims 5-7, further comprising stopping power supply to the electric motor (10) by a logic unit (16) when the extra heat demand falls under a value or is equal to zero.

9. The method according to any of the previous claims, wherein power supply to the electric motor (10) is increased gradually until the voltage and/or the frequency is reached for generating heat.

10. The method according to any of the previous claims, wherein the heat pump system (11) is configured to collect heat from stator windings (16) of the electric motor (10).

11. An electric vehicle (1) comprising an electric motor (10), a heat pump system (11) and at least one controller (12) adapted to execute the steps of the method according to any of the previous claims.

12. A computer program product comprising instructions to cause the electric vehicle (1) of the previous claim to execute any of the steps of the method claims 1-10.
